# EUROPÄISCHE PATENTSCHRIFT

(11) **EP 3 067 593 B1**
(45) Veröffentlichungstag und Bekanntmachung des Hinweises auf die Patenterteilung: **28.02.2018**
(21) Anmeldenummer: 16000560.9
(22) Anmeldetag: 08.03.2016
(51) Int. Cl.: F16J 15/3268

(54) **TRANSPORTSICHERUNG FÜR EINE GLEITRINGDICHTUNG, GLEITRINGDICHTUNG MIT EINER SOLCHEN TRANSPORTSICHERUNG SOWIE VERFAHREN ZUM MONTIEREN EINER GLEITRINGDICHTUNG**
TRANSPORT SECURING SYSTEM FOR A SLIDE RING SEAL, SLIDE RING SEAL WITH SUCH A TRANSPORT SECURING SYSTEM AND METHOD FOR MOUNTING SUCH A SLIDE RING SEAL
SECURITE DE TRANSPORT POUR UNE BAGUE D'ETANCHEITE GLISSANTE, BAGUE D'ETANCHEITE GLISSANTE COMPRENANT UNE TELLE SECURITE DE TRANSPORT ET PROCEDE DE MONTAGE D'UNE BAGUE D'ETANCHEITE GLISSANTE

(30) Priorität: 12.03.2015 DE 102015003352
(43) Veröffentlichungstag der Anmeldung: 14.09.2016
(73) Patentinhaber: KACO GmbH + Co. KG, 74072 Heilbronn (DE)
(72) Erfinder: Klaudt, Marcel, 70806 Körnwestheim (DE)
(74) Vertreter: Kohl, Karl-Heinz

(56) Entgegenhaltungen:
- DE-A- 2 540 556
- DE-A1-102011 009 352

## Beschreibung

Die Erfindung betrifft eine Transportsicherung für eine Gleitringdichtung nach dem Oberbegriff des Anspruches 1, eine Gleitringdichtung mit einer solchen Transportsicherung nach Anspruch 11 sowie ein Verfahren zum Montieren einer Gleitringdichtung nach dem Oberbegriff des Anspruches 14.

Im Dokument DE 10 2011 009352 ist eine Transportsicherung gemäß dem Oberbegriff vom Anspruch 1 offenbart. Andererseits, ist im Dokument DE 25 40 556 ein Verfahren zum Montieren einer Gleitringdichtung gemäß dem Oberbegriff vom Anspruch 14 offenbart. Es ist bei Gleitringdichtungen bekannt, die Komponenten der Gleitringdichtung für den Transport mittels einer Transportsicherung zusammenzuhalten. Hierfür wird als Transportsicherung ein hülsenförmiges Sicherungsteil verwendet, das in den Gegenring und den Gleitring der Gleitringdichtung geschoben wird. Das Sicherungsteil hintergreift mit seinem freien Ende eine Schulter an der Innenseite des Gleitringes und liegt an der vom Gleitring abgewandten Außenseite des Gegenringes mit einem weiteren Halteteil an. Dadurch werden der Gleitring und der Gegenring axial geklemmt.
Wenn eine Gleitringdichtung zusätzlich zum Gegen- und Gleitring eine vorgeschaltete Lippendichtung aufweist, besteht bei diesen Transportsicherungen das Problem, dass beim Herausziehen der Transportsicherung die Lippendichtung umgestülpt und/oder beschädigt wird.
Der Erfindung liegt die Aufgabe zugrunde, die gattungsgemäße Transportsicherung, die gattungsgemäße Gleitringdichtung sowie das gattungsgemäße Verfahren so auszubilden, dass ein zuverlässiger Transport und/oder Einbau der Gleitringdichtung sichergestellt ist. Diese Aufgabe wird bei der gattungsgemäßen Transportsicherung erfindungsgemäß mit den kennzeichnenden Merkmalen des Anspruches 1, bei der Gleitringdichtung erfindungsgemäß mit den Merkmalen des Anspruches 11 und beim gattungsgemäßen Verfahren erfindungsgemäß mit den kennzeichnenden Merkmalen des Anspruches 14 gewährleistet.

Die Transportsicherung weist die beiden ineinander gesetzten Sicherungsteile auf, von denen das äußere Sicherungsteil den radial elastisch verformbaren Hülsenteil aufweist. Das innere Sicherungsteil liegt mit dem Abstützteil in der Transportstellung an der Innenseite des Hülsenteiles des äußeren Sicherungsteiles an. Der Abstützteil verhindert, dass sich der Hülsenteil des äußeren Sicherungsteiles radial elastisch zusammenzieht. Wenn das innere Sicherungsteil axial aus der Transportstellung verschoben wird, wird der Hülsenteil des äußeren Sicherungsteiles freigegeben, so dass sich der Hülsenteil radial zusammenziehen kann. Das innere Sicherungsteil kann den Hülsenteil radial elastisch aufweiten, wenn das innere Sicherungsteil in umgekehrter Richtung zurück in die Transportstellung verschoben wird. Dabei wird der Hülsenteil des äußeren Sicherungsteiles radial elastisch aufgeweitet.

Die beiden Sicherungsteile liegen koaxial zueinander, wobei das innere Sicherungsteil in der Transportstellung den Hülsenteil des äußeren Sicherungsteiles gegen Zurückfedern sichert.

Vorteilhaft ist der Abstützteil des zweiten, inneren Sicherungsteiles hülsenförmig ausgebildet. Dadurch stützt der Abstützteil den Hülsenteil des ersten, äußeren Sicherungsteiles zuverlässig über den gesamten Umfang ab.

Damit eine einfache radiale Aufweitung des Hülsenteiles des äußeren Sicherungsteiles erreicht wird, ist der Hülsenteil des äußeren Sicherungsteiles vorteilhaft mit wenigstens einem Axialschlitz versehen, der sich vom zugehörigen benachbarten Ende des äußeren Sicherungsteiles aus erstreckt.

Vorteilhaft ist der zweite Halteteil des äußeren Sicherungsteiles ein Ringflansch, der vorteilhaft eine umlaufende Ringkante aufweist. Mit ihr ist es sehr einfach und zuverlässig möglich, einen der beiden Gleitpartner einer Gleitringdichtung axial zu sichern.

Bei einer vorteilhaften Ausbildung weist der Ringflansch des äußeren Sicherungsteiles eine Anschlagfläche auf. Mit ihrer Hilfe kann die Transportsicherung bei der Montage der Gleitringdichtung sehr einfach aus der Gleitringdichtung herausgeschoben werden.

Die Anschlagfläche ist vorteilhaft die Stirnseite des Ringflansches des äußeren Sicherungsteils. Da sich der Ringflansch über den Umfang des Hülsenteiles des äußeren Sicherungsteiles erstreckt, lässt sich das äußere Sicherungsteil zuverlässig axial verschieben.

Bei einer einfachen Ausbildung liegt diese Anschlagfläche in einer Radialebene des äußeren Sicherungsteiles.

Zur Begrenzung des Verschiebeweges des inneren Sicherungsteiles ist dieses Sicherungsteil mit wenigstens einem Anschlag versehen.

Dieser Anschlag hat vorteilhaft axialen Abstand von der Anschlagfläche des äußeren Sicherungsteils.

Der Anschlag des inneren Sicherungsteiles ist bei einer bevorzugten Ausführungsform kegelförmig ausgebildet.

Das äußere Sicherungsteil weist wenigstens einen Gegenanschlag auf, der im Bewegungsweg des Anschlages des inneren Sicherungsteiles liegt. Das innere Sicherungsteil kann darum aus der Transportstellung so weit verschoben werden, bis der Anschlag des inneren Sicherungsteiles am Gegen- \ anschlag des äußeren Sicherungsteiles zur Anlage kommt.

Der Gegenanschlag des äußeren Sicherungsteiles ist vorteilhaft als Ring ausgebildet, der koaxial zum inneren Sicherungsteil verläuft. Dadurch ist sichergestellt, dass die beiden Sicherungsteile in der Anschlagstellung exakt zueinander ausgerichtet sind.

Bei einer einfachen Ausführung ist der Gegenanschlag mit einer Kegelfläche als Anschlagfläche versehen. Sie kann auch eine Radialfläche sein, die sich senkrecht zur Achse des äußeren Sicherungsteiles erstreckt.

Der Gegenanschlag ist vorteilhaft an seiner vom inneren Sicherungsteil abgewandten Seite mit dem radial nach außen gerichteten ersten Halteteil versehen. Dadurch ergibt sich eine sehr einfache Gestaltung des äußeren Sicherungsteils.

Der erste Halteteil des äußeren Sicherungsteiles ist vorteilhaft mit wenigstens einem Verdrehschutz versehen. Er ermöglicht es, das äußere Sicherungsteil drehfest mit der Gleitringdichtung in der Transportstellung zu verbinden.

Die erfindungsgemäße Gleitringdichtung zeichnet sich dadurch aus, dass sie die erfindungsgemäße Transportsicherung aufweist.

Damit der Gleitring und der Gegenring der Gleitringdichtung durch die Transportsicherung fest miteinander verbunden sind, ist der Gleitring vorteilhaft innenseitig mit wenigstens einer Schulterfläche versehen, die vom zweiten Halteteil des ersten Sicherungsteils in der Transportstellung hintergriffen ist.

Wenn die Gleitringdichtung eine Dichtlippe aufweist, dann hat diese bei einer vorteilhaften Ausführungsform geringen Abstand von der Außenseite des äußeren Sicherungsteiles. Dadurch wird eine radiale Aufweitung der Dichtlippe vor dem Einbau verhindert.

Beim erfindungsgemäßen Verfahren wird die Gleitringdichtung mit der Transportsicherung als Einheit im Einbauraum des jeweiligen Aggregates montiert. Anschließend wird die abzudichtende Welle in die Gleitringdichtung geschoben. Hierbei kommt eine Wellenschulter der Welle am Anschlag des inneren Sicherungsteiles zur Anlage. Dies hat zur Folge, dass das innere Sicherungsteil axial innerhalb des äußeren Sicherungsteiles verschoben wird. Der Abstützteil des inneren Sicherungsteiles gleitet hierbei entlang der Innenwand des äußeren Sicherungsteiles so weit, bis der zunächst radial aufgeweitete Hülsenteil des äußeren Sicherungsteiles freigegeben wird. Dann kann sich der Hülsenteil radial nach innen elastisch zusammenziehen. Dies hat zur Folge, dass das äußere Sicherungsteil in eine Freigabestellung gelangt, in der es nicht mehr in Eingriff mit einem der Gleitpartner der Gleitringdichtung ist. Der Hülsenteil kann sich im Extremfall so weit nach innen zusammenziehen, bis er auf einem Wellenabschnitt aufliegt. Beim weiteren Verschieben werden beide Sicherungsteile und damit die komplette Transportsicherung axial aus der Gleitringdichtung geschoben.

Bei einer Ausführungsform hat die Welle eine weitere Wellenschulter. Beim weiteren Verschieben der Welle durch die Gleitringdichtung kommt die weitere Wellenschulter am zweiten Halteteil des äußeren Sicherungsteils zur Anlage.

Bei einer anderen Ausführungsform kommen beide Sicherungsteile mit der Wellenschulter in Kontakt, so dass sie beim weiteren Verschieben der Welle aus der Gleitringdichtung herausgeschoben werden.

Vorteilhaft liegt der zweite Halteteil des ersten Sicherungsteiles bei nach innen verformtem Hülsenteil im Bewegungsweg der Wellenschulter.

Wenn die Gleitringdichtung vorteilhaft eine Dichtlippe aufweist, dann hat sie von der Außenseite des äußeren Sicherungsteiles vorteilhaft Abstand. Es ist so gestaltet, dass es die Dichtlippe über die weitere Wellenschulter auf einen Wellenabschnitt mit größerem Durchmesser leitet, wodurch verhindert wird, dass die Dichtlippe an der Wellenschulter hängen bleibt und beim Durchschieben der Welle beschädigt wird.

Weitere Merkmale der Erfindung ergeben sich aus den weiteren Ansprüchen, der Beschreibung und den Zeichnungen.
Die Erfindung wird anhand eines in der Zeichnung dargestellten Ausführungsbeispieles näher erläutert. Es zeigen
- Fig. 1: im Axialschnitt eine in einer Gleitringdichtung angeordnete erfindungsgemäße Transportsicherung,
- Fig. 2 und Fig. 3: jeweils im Axialschnitt zwei verschiedene Phasen beim Einführen einer Welle in eine montierte Gleitringdichtung, in der sich die erfindungsgemäße Transportsicherung befindet,
- Fig. 4: in einer Darstellung entsprechend Fig. 3 eine zweite Ausführungsform einer erfindungsgemäßen Transportsicherung.

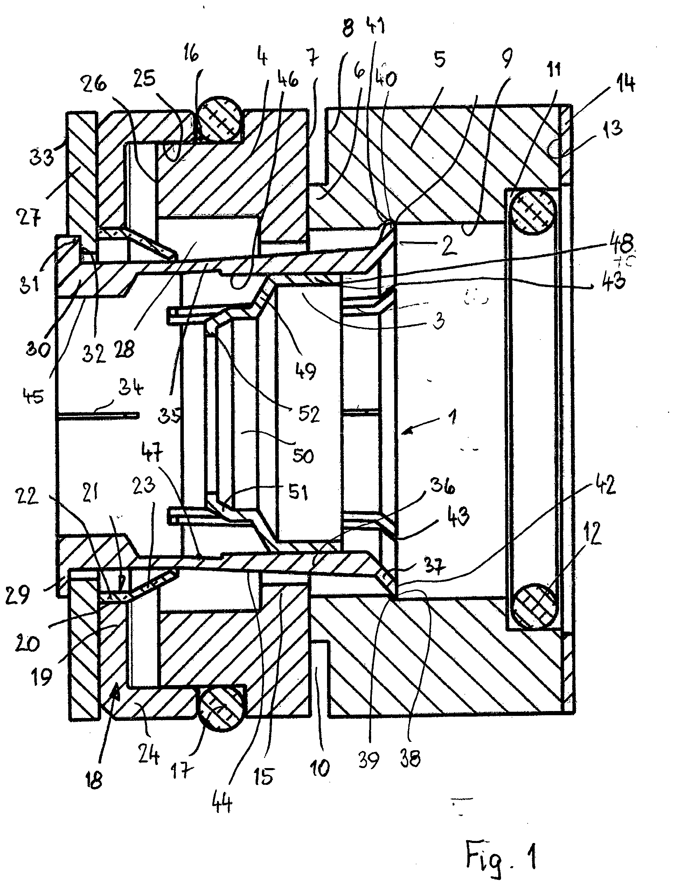

Fig. 1 zeigt eine Gleitringdichtung, in der eine Transportsicherung 1 untergebracht ist. Sie weist zwei Sicherungsteile 2, 3 auf, die koaxial zueinander angeordnet sind. Das Sicherungsteil 2 umgibt das Sicherungsteil 3.

Die Transportsicherung 1 befindet sich innerhalb der Gleitringdichtung, welche einen Gegenring 4 und einen Gleitring 5 aufweist. Der Gleitring 5 liegt mit einem ringförmigen Ansatz 6 an einer radialen Ringfläche 7 des Gegenringes 4 dichtend an. Die Ringfläche 7 bildet die dem Gleitring 5 zugewandte Stirnseite des Gegenringes 4. Der Ansatz 6 ist im radial inneren Bereich der radialen Stirnseite 8 des Gleitringes 5 vorgesehen und erstreckt sich radial nach innen bis zur zylindrischen Innenseite 9 des Gleitringes 5. Aufgrund des ringförmigen Ansatzes 6 wird zwischen dem Gleitring 5 und dem Gegenring 4 ein radialer Ringraum 10 gebildet, der radial nach außen offen und radial nach innen durch den ringförmigen Ansatz 6 geschlossen ist.

Der Gleitring 5 ist an dem vom Gegenring 4 abgewandten Ende mit einer innenseitigen Ringnut 11 versehen, die eine Sekundärdichtung 12 aufnimmt. Sie wird beispielsweise durch einen O-Ring gebildet. Die Ringnut 11 ist radial nach innen sowie axial nach außen offen. Der Gleitring 5 liegt mit seiner vom Gegenring 4 abgewandten radialen Stirnseite 13 an einem flachen Federelement 14 an. Es hat gleichen Außendurchmesser wie der Gleitring 5 und kleineren Innendurchmesser als die Stirnseite 13 des Gleitringes 5. Das Federelement 14 kann eine Federscheibe, eine Wellfeder, eine Schraubenfeder oder dergleichen sein.

Der Gegenring 4 ist an seinem dem Gleitring 5 zugewandten Ende mit einem radial nach innen vorstehenden Ringansatz 15 versehen, der radial nach innen über die zylindrische Innenseite 9 des Gleitringes 5 vorsteht. Die dem Gleitring 5 zugewandte Stirnseite des Ringansatzes 15 liegt in der Ringfläche 7 des Gegenringes 4. Der Gegenring 4 ist an seiner Außenseite mit einer Ringnut 16 versehen, die radial nach außen und axial in Richtung auf das vom Gleitring 5 abgewandte Ende offen ist. Die Ringnut 16 nimmt eine Sekundärdichtung 17 auf, die beispielsweise ein O-Ring ist. In die Ringnut 16 ragt axial ein Stützring 18, der im Axialschnitt L-Form hat. Der eine Schenkel 19 des Stützringes 18 verläuft radial und trägt an seiner ringförmigen Stirnseite 20 eine Sekundärdichtung 21, die im Ausführungsbeispiel eine Lippendichtung ist. Sie ist vorteilhaft einstückig ausgebildet und mit einem ringförmigen Befestigungsteil 22 auf der Stirnseite 20 des Schenkels 19 des Stützringes 18 befestigt. Vom Befestigungsteil 22 aus erstreckt sich der Dichtteil 23, der auf einem Kegelmantel liegt und der bei montierter Gleitringdichtung dichtend am abzudichtenden Maschinenteil, vorzugsweise einer Welle, anliegt. Die Sekundärdichtung 21 kann auch aus zwei oder mehr Teilen bestehen. Sie kann ferner ein Einlegeteil sein oder an den Stützring 18 anvulkanisiert sein.
Der andere Schenkel 24 des Stützringes 18 erstreckt sich in die Ringnut 16 des Gegenringes 4 und sichert die Sekundärdichtung 17 in der Ringnut 16 axial. Der Schenkel 24 liegt ohne Klemmung am zylindrischen Boden 25 der Ringnut 16 auf. Der Schenkel 19 des Stützringes 18 hat axialen Abstand von der gegenüberliegenden Stirnseite 26 des Gegenringes 4.
Der Stützring 18 liegt mit seinem vertikalen Schenkel 19 an einer Stützscheibe 27 an, deren Außendurchmesser gleich dem Außendurchmesser des Schenkels 24 des Stützringes 18, des Gegenringes 4 und des Gleitringes 5 ist. Der Innendurchmesser der ringförmigen Stützscheibe 27 ist beispielhaft kleiner als der Innendurchmesser des Ringansatzes 15 des Gegenringes 4.
Der Dichtteil 23 der Sekundärdichtung 21 ragt in einen Ringraum 28 des Gegenringes 4. Der Ringraum 28 ist an der Innenseite des Gegenringes 4 vorgesehen und zur Stirnseite 26 sowie radial nach innen offen.
Der Innendurchmesser der Stützscheibe 27 ist kleiner als der Innendurchmesser des Befestigungsteils 22 der Sekundärdichtung 21. Dadurch wird der Befestigungsteil 22 radial von der Stützscheibe 27 überragt und dadurch geschützt.

Um einen sicheren Halt der Sekundärdichtung 21 am Stützring 18 zu gewährleisten, erstreckt sich der Befestigungsteil 22 über die gesamte Breite des Schenkels 19 des Stützringes 18.

Die Stützscheibe 27 wird durch das Sicherungsteil 2 axial gesichert, so dass sie nicht von der Gleitringdichtung abfallen kann. Hierzu ist das Sicherungsteil 2 an seinem einen Ende mit einem ringförmigen Radialflansch 29 versehen, der sich nach außen erstreckt und die Stützscheibe 27 an der vom Gegenring 4 abgewandten Seite übergreift. Der radial nach außen verlaufende Radialflansch 29 ist am Ende eines verdickten Endteiles 30 vorgesehen, der hülsenförmig ausgebildet ist. Der Radialflansch 29 ist über wenigstens einen Verdrehschutz 31 mit der Stützscheibe 27 verbunden, so dass beide Bauteile nicht gegeneinander verdreht werden können. Der Verdrehschutz 31 kann beispielsweise durch eine axial vorstehende Nase gebildet sein, die in eine stirnseitige Vertiefung 32 in der Stirnseite 33 der Stützscheibe 27 eingreift. Die Stirnseite 33 verläuft radial und eben. Der Verdrehschutz 31 liegt am radialen Boden sowie an der Seitenwand der Vertiefung 32 der Stützscheibe 27 an.

Die Stützscheibe 27 kann auch entfallen. Dann liegt beispielsweise der vertikale Schenkel 19 des Stützringes 18 am Radialflansch 29 des Sicherungsteiles 2 an.

Das Sicherungsteil 2 ist an seinem den Endteil 30 aufweisenden Ende mit wenigstens einem axial verlaufenden Schlitz 34 versehen. Das Sicherungsteil 2 ist im Bereich des Endteiles 30 so ausgebildet, dass der Verdrehschutz 31 unter radialer Vorspannung an der Seitenwand der ringförmigen Vertiefung 32 der Stützscheibe 27 anliegt. Dies trägt zu einer sicheren Befestigung der Transportsicherung 1 an der Gleitringdichtung bei.

Der verdickte Endteil 30 geht in einen dünnen hülsenförmigen Zwischenteil 35 über. An ihn schließt ein hülsenförmiger Endteil 36 an, dessen Wandstärke vom Zwischenteil 35 aus sich stetig vergrößert. Das vom Endteil 30 abgewandte Ende des Endteils 36 weist einen nach außen gerichteten Ringflansch 37 auf, der mit seinem radial äußeren Rand 38 eine umlaufende Ringschulter 39 in der Innenseite 9 des Gleitringes 5 hintergreift. Der Rand 38 des Ringflansches 37 ist annähernd scharfkantig ausgebildet, so dass das Sicherungsteil 2 zuverlässig an der Ringschulter 39 des Gleitringes 5 gehalten wird. Die Ringschulter 39 liegt auf einer Kegelfläche, so dass bei der noch zu beschreibenden Montage der Gleitringdichtung das Sicherungsteil 2 zuverlässig von der Gleitringdichtung gelöst werden kann.

Der Ringflansch 37 ist mit wenigstens einem Verdrehschutz 40 versehen, mit dem das Sicherungsteil 2 verdrehfest mit dem Gleitring 5 verbunden werden kann. Der Verdrehschutz ist beispielsweise ein radialer Vorsprung am Ringflansch 37, der in eine entsprechende Vertiefung 41 in der Innenseite 9 des Gleitringes 5 eingreift. Der Verdrehschutz 40 und die Vertiefung 41 sind so ausgebildet, dass ein Formschluss in Umfangsrichtung zwischen dem Gleitring 5 und dem Sicherungsteil 2 hergestellt wird.

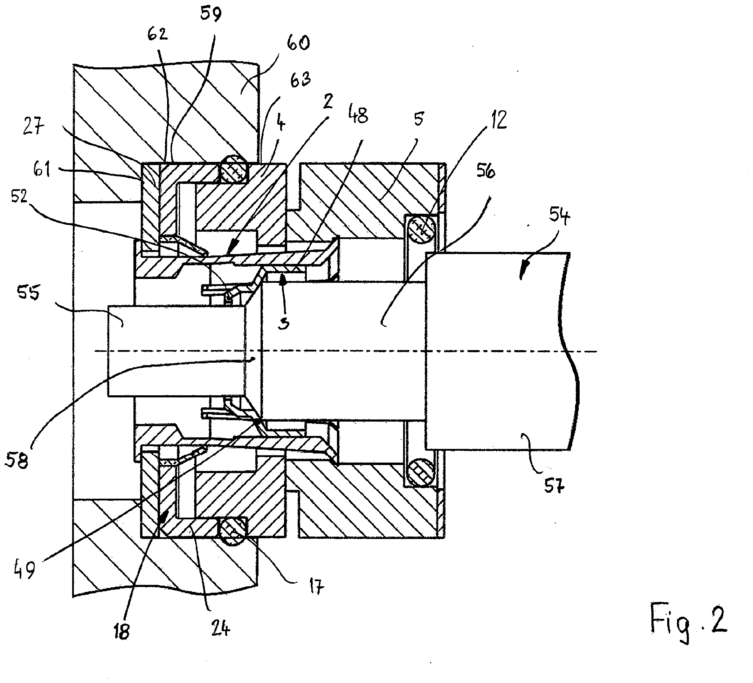

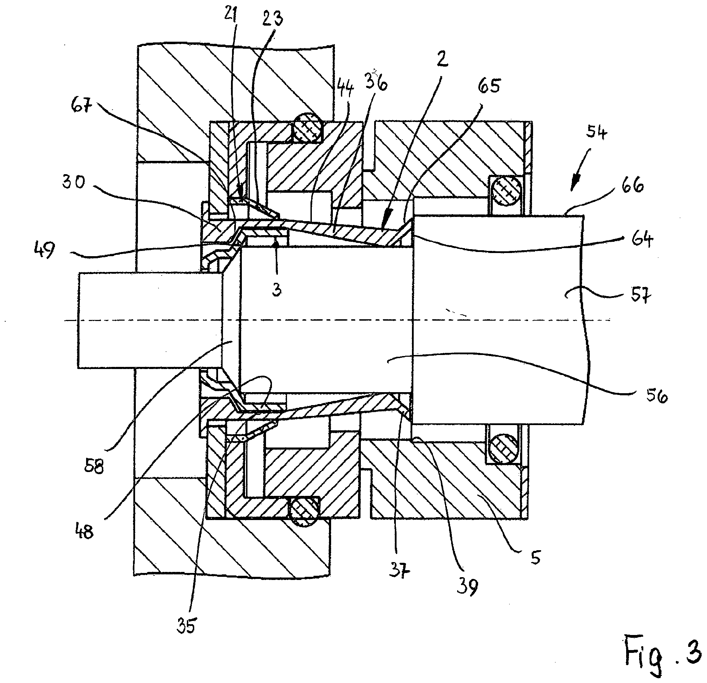

Der Ringflansch 37 weist eine in einer Radialebene liegende Stirnseite 42 auf, die beim Montagevorgang mit der durch die Gleitringdichtung zu schiebenden Welle 54 (Fig. 2 und 3) zusammenwirkt.

Das Sicherungsteil 2 ist an seinem vom verdickten Endteil abgewandten Endbereich mit wenigstens einem axial verlaufenden Schlitz 43 versehen, der sich über einen Teil der axialen Länge des Sicherungsteiles 2 erstreckt und in der Stirnseite 42 des Sicherungsteiles 2 endet.

Die Außenseite 44 des Sicherungsteiles 2 liegt im Bereich des verstärkten Endteiles 30 auf einem Zylindermantel, der in Höhe des dünnen Zwischenteiles 35 in einen Kegelmantel übergeht. Er erstreckt sich bis zum Ringflansch 37.

Der verdickte Endteil 30 hat eine zylindrische Innenseite 45, deren Durchmesser kleiner ist als der Durchmesser der Innenseite 46 des Endteils 36 des Sicherungsteiles 2 in der dargestellten Transportstellung. Die Innenseite des dünnwandigen Zwischenteils 35 kann auf einem Zylindermantel oder einem Kegelmantel liegen.

Das Sicherungsteil 2 ragt mit seinem verdickten Endteil 30 durch die Stützscheibe 27 mit Spiel, so dass das Sicherungsteil 2 nur mit seinem Radialflansch 29 an der vom Gegenring 4 abgewandten Stirnseite 33 der Stützscheibe 27 anliegt sowie über den Verdrehschutz 31 verdrehgesichert mit der Stützscheibe 27 verbunden ist. Der Endteil 36 des Sicherungsteiles 2 ragt mit radialem Abstand durch den Ringansatz 15 des Gegenringes 4. Das Sicherungsteil 2 ist somit lediglich über seinen Ringflansch 37 mit dem Gleitring 5 der Gleitringdichtung verbunden, hat im Übrigen aber Abstand von den beiden Gleitpartnern 4, 5. Die Sekundärdichtung 21 liegt mit dem freien Rand ihres Dichtteiles 23 in Höhe des dünnwandigen Zwischenteils 35 und mit geringem Abstand zur Außenseite 44 des Sicherungsteiles 2. Dadurch wird eine radiale Aufweitung des Dichtteiles 23 vermieden.

Das Sicherungsteil 3 ist vom Sicherungsteil 2 umgeben und liegt mit einem zylindrischen Abstützteil 48 an der Innenseite 46 des Endteils 36 des Sicherungsteiles 2 an. Durch den Abstützteil 48 wird der Endteil 36 des äußeren Sicherungsteiles 2 radial so aufgeweitet, dass die Ringkante 38 des Ringflansches 37 die Ringschulter 39 des Gleitringes 5 hintergreift. Der Abstützteil 48 des inneren Sicherungsteiles 3 nimmt die infolge der radialen Aufweitung des Endteiles 36 auftretenden Radialkräfte auf und stellt sicher, dass der Ringflansch 37 mit seiner Ringkante 38 in Eingriff mit dem Gleitring 5 gehalten wird.

Der Abstützteil 48 liegt in der in Fig. 1 dargestellten Transportstellung beispielhaft etwa in halber axialer Breite des Endteils 36 des äußeren Sicherungsteiles 2 und mit Abstand zum Ringflansch 37. Der Abstützteil 48 geht an seinem vom Ringflansch 37 abgewandten Ende in einen einen Anschlag bildenden Kegelteil 49 über, der den zylindrischen Abstützteil 48 mit einem einen Anschlag bildenden, im Durchmesser kleineren zylindrischen Zwischenteil 50 verbindet. Er ist über ein weiteres Kegelteil 51 mit einem Radialflansch 52 verbunden, der vom Kegelteil 51 radial nach innen absteht. Der Radialflansch 52 hat nur eine geringe Radialbreite.

Die beiden Sicherungsteile 2, 3, welche die Transportsicherung 1 bilden, halten den Gleitring 4 und den Gegenring 5, den Stützring 18 und die Stützscheibe 27 axial zusammen. Das äußere Sicherungsteil 2 ist so ausgebildet, dass der Gleitring 5, der Gegenring 4 und unter Zwischenlage der Sekundärdichtung 17 der Stützring 18 und die Stützscheibe 27 unter Axialkraft aneinanderliegen. Die gesamte Gleitringdichtung kann auf diese Weise problemlos transportiert und gehandhabt werden.

Die Fig. 1 und 2 zeigen die Gleitringdichtung mit der Transportsicherung 1 im Transportzustand. Die empfindliche Sekundärdichtung 21 mit dem Dichtteil 23 liegt geschützt an der Außenseite 44 des äußeren Sicherungsteiles 2 auf. Durch die Gleitringdichtung wird ein abzudichtendes Bauteil 54 geschoben, das im Ausführungsbeispiel eine Welle ist. Sie ist beispielhaft Teil eines Kompressors, kann aber auch Teil anderer Aggregate sein. Die Welle 54 hat beispielhaft drei im Durchmesser unterschiedliche Wellenabschnitte 55, 56, 57. Von ihnen hat der am Ende der Welle 54 befindliche Wellenabschnitt 55 den kleinsten und der Wellenabschnitt 57 den größten Durchmesser. Am Übergang vom Wellenabschnitt 55 zum Wellenabschnitt 56 befindet sich eine Kegelfläche 58. Der Durchmesser des Wellenabschnittes 55 ist kleiner als der Innendurchmesser des Radialflansches 52 des inneren Sicherungsteils 3. Der Durchmesser des mittleren Wellenabschnittes 56 ist kleiner als der Innendurchmesser des zylindrischen Abstützteils 48 des inneren Sicherungsteiles 3. Schließlich ist der Durchmesser des Wellenabschnittes 57 kleiner als der Innendurchmesser des Gleitringes 5 und der Sekundärdichtung 12.

Bei der Montage wird die Welle 54 von der Seite des Gleitringes 5 aus in die Gleitringdichtung geschoben. Hierbei kommt die Kegelfläche 58 zur Anlage am Kegelteil 49 des inneren Sicherungsteiles 3. Diese Situation ist in Fig. 2 dargestellt. Alle übrigen Wellenabschnitte 55, 57 haben in dieser Stellung Abstand von Teilen der Gleitringdichtung. In dieser Anschlagstellung ragt der endseitige Wellenabschnitt 55 durch den Radialflansch 52 des inneren Sicherungsteiles 3 sowie axial über das erste Sicherungsteil 2. Die Gleitringdichtung selbst ist in einen Einbauraum 59 eines Gehäuses 60 in bekannter Weise eingesetzt. Die Stützscheibe 27 liegt an einer Seitenwand 61 sowie mit ihrer äußeren Mantelfläche am Boden 62 des Einbauraumes 59 an. Der im Axialschnitt horizontale Schenkel 24 des Stützringes 18 liegt mit Schiebesitz am Boden 62 des Einbauraumes 59 an. Der Gegenring 4 ragt teilweise in den Einbauraum 59 und liegt mit einem Teil seiner zylindrischen Außenseite 63 am Boden 62 an. Die zwischen dem Schenkel 24 und dem Gegenring 4 liegende Sekundärdichtung 17 ist elastisch verformt und gewährleistet die statische Abdichtung des Gegenringes 4 im Einbauraum 59. Der Schenkel 24 des Stützringes 18 sowie ein Teil des Gegenringes 4 sitzen mit Schiebesitz im Einbauraum 59. Die in der Einbaulage elastisch verformte Sekundärdichtung 17 gewährleistet den sicheren Sitz.

Wird die Welle 54 weiter in die eingebaute Gleitringdichtung geschoben, wird das innere Sicherungsteil 3 durch die Kegelfläche 58 mitgenommen, wodurch das innere Sicherungsteil 3 im äußeren Sicherungsteil 2 verschoben wird. Hierbei gleitet der zylindrische Endteil 48 des Sicherungsteiles 3 längs der Innenseite 46 des äußeren Sicherungsteiles 2. Sobald der Endteil 48 in den Bereich des dünnwandigen Zwischenteiles 35 des äußeren Sicherungsteiles 2 gelangt, federt der Endteil 36 des äußeren Sicherungsteiles 2 zusammen, wobei sich die Schlitze 43 schließen. Dies hat zur Folge, dass der Ringflansch 37 des äußeren Sicherungsteiles 2 von der Ringschulter 39 des Gleitringes 5 freikommt und der Ringflansch 37 in den Verschiebeweg einer radialen Schulter 64 zwischen den beiden Wellenabschnitten 56 und 57 gelangt.

Der Endteil 48 des äußeren Sicherungsteiles 2 federt radial so weit nach innen, bis er am Wellenabschnitt 56 zur Anlage kommt (Fig. 3). Der Endteil 48 liegt dann am Übergang zum Ringflansch 37 am Wellenabschnitt 56 an. Der Ringflansch 37 selbst ist so ausgebildet, dass seine äußere Kegelfläche 65 zumindest etwa bis auf Höhe der zylindrischen Mantelfläche 66 des Wellenabschnittes 57 reicht.

Vorteilhaft gelangt der Ringflansch 37 dann in Kontakt mit der Schulterfläche 64 der Welle 54, wenn der Kegelteil 49 des inneren Sicherungsteiles 3 in Kontakt mit einer innenseitigen Kegelfläche 67 des verdickten Endteils 30 des äußeren Sicherungsteiles 2 kommt. Infolge des radial nach innen zusammengezogenen Endteils 36 verläuft die Wandung kegelförmig nach innen. Dadurch wird der Abstützteil 48 des inneren Sicherungsteiles 3 zwischen dem Endteil 30 und der kegelförmig verlaufenden Wand des Endteils 36 axial umfasst.

Diese Situation ist in Fig. 3 dargestellt. Die Welle 54 wird weiter in Fig. 3 nach links verschoben. Hierbei werden die beiden Sicherungsteile 2, 3 durch die Radialschulter 64 und die Kegelfläche 58 aus der Gleitringdichtung herausgeschoben. Der Dichtteil 23 der Sekundärdichtung 21 gelangt auf die Kegelfläche 65 des Ringflansches 37 und wird von ihr auf die Mantelfläche 66 des Wellenabschnittes 57 geleitet. Auf diese Weise ist sichergestellt, dass der empfindliche Dichtteil 23 bei der Montage nicht beschädigt wird.

Die beiden Sicherungsteile 2, 3 werden durch die Welle 54 aus der Gleitringdichtung so weit herausgeschoben, dass sie anschließend von der Welle abgenommen werden können. Die beiden Sicherungsteile 2, 3 sind vorteilhaft jeweils einstückig ausgebildet und können wiederverwendet werden, weil sie bei der Montage nicht zerstört werden.

Der empfindliche Dichtteil 23, der vorteilhaft als Dichtlippe ausgebildet ist, wird bei der Montage nicht beschädigt, weil er durch das äußere Sicherungsteil 2 in der beschriebenen Weise geschützt wird. Da das äußere Sicherungsteil 2 durch das innere Sicherungsteil 3 im Ausgangszustand radial aufgeweitet wird, ist das Spaltmaß zwischen der Welle 54 und dem Dichtteil 23 nicht maßgeblich. Aufgrund der glatten Oberfläche des äußeren Sicherungsteiles 2 kann der Dichtteil 23 bei der Montage nicht verletzt werden.

Die Transportsicherung 1 ist im Transportzustand nahezu vollständig innerhalb der Gleitringdichtung untergebracht und nimmt beim Transport nur ein geringes Volumen ein. Innerhalb der Gleitringdichtung ist der Dichtteil 23 geschützt, da die Durchtrittsöffnung der Stützscheibe 27 vom Sicherungsteil 2 so geschlossen ist, dass von außen kein Zutritt zum Dichtteil 23 möglich ist.

Die beiden Sicherungsteile 2, 3, die jeweils vorteilhaft einstückig ausgebildet sind, können im Hinblick auf ihre Funktion bei der Montage aus unterschiedlichen Werkstoffen bestehen. Da das äußere Sicherungsteil 2 in der Transportstellung radial aufgeweitet wird, wird ein entsprechendes Material für das Sicherungsteil 2 verwendet, das ein leichtes Aufspreizen des Sicherungsteiles 2 ermöglicht. Das innere Sicherungsteil 3 hingegen besteht vorteilhaft aus einem harten Werkstoff, weil das innere Sicherungsteil 3 das äußere Sicherungsteil 2 mit dem Abstützteil 48 radial elastisch aufspreizen und im Transportzustand dementsprechend die dadurch hervorgerufenen Radialkräfte aufnehmen muss.

Die beiden Sicherungsteile 2,3 werden in einem Arbeitsschritt bei der Montage aus der Gleitringdichtung geschoben, so dass die Montagezeiten kurz sind.

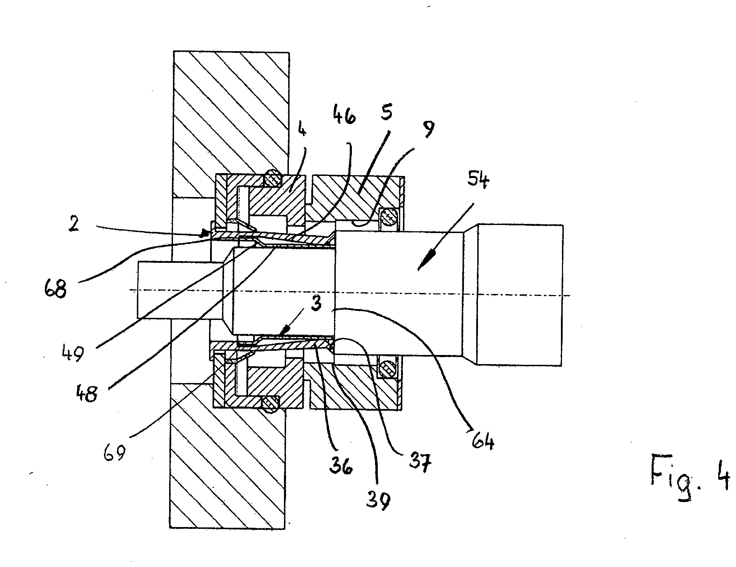

Fig. 4 zeigt eine Ausführungsform, bei der das innere Sicherungsteil 3 eine andere Ausbildung als bei dem vorigen Ausführungsbeispiel hat.

Das äußere Sicherungsteil 2 weist anstelle der Kegelfläche 67 der vorigen Ausführungsform eine Radialfläche 68 auf, die eine Ringfläche ist, an welcher das innere Sicherungsteil 3 in der Endlage (Fig. 4) zur Anlage kommt.

Das Sicherungsteil 3 hat einen zylindrischen Endteil 69, der in der Endstellung gemäß Fig. 4 mit seiner Stirnseite an der Radialfläche 68 des äußeren Sicherungsteiles 2 anliegt. Der zylindrische Endteil 69 geht über den Kegelteil 49 in den zylindrischen Endteil 48 über, der kleineren Außendurchmesser als der zylindrische Endteil 69 hat.

Das Sicherungsteil 3 ist entsprechend der vorigen Ausführungsform vorteilhaft einstückig ausgebildet.

In der Fig. 1 entsprechenden Ausgangslage liegt das Sicherungsteil 3 mit seinem Endteil 69 an der Innenseite 46 des Endteiles 36 des Sicherungsteiles 2 an. Das äußere Sicherungsteil 2 wird dadurch, wie beim vorigen Ausführungsbeispiel beschrieben, radial so stark aufgeweitet, dass der Ringflansch 37 des äußeren Sicherungsteiles 2 die Ringschulter 39 an der Innenseite 9 des Gleitringes 5 hintergreift. Dadurch sind der Gegenring 4 und der Gleitring 5 in der beschriebenen Weise axial zusammengehalten.

Wird das Bauteil 54 in die Gleitringdichtung axial geschoben, trifft die Radialschulter 64 des Bauteiles 54 auf die Stirnseite des Endteiles 48 des inneren Sicherungsteiles 3. Es wird dadurch beim Einschieben des Bauteiles 54 mitgenommen, wobei der zylindrische Endteil 69 längs der Innenseite 46 des äußeren Sicherungsteiles 2 verschoben wird. Sobald der Endteil 69 im Bereich außerhalb des Endteiles 36 des äußeren Sicherungsteiles 2 sich befindet, kann der Endteil 36 sich elastisch zusammenziehen. Hierbei gelangt der Ringflansch 37 in den Bewegungsweg der Radialschulter 64 des Bauteils 54.

Sobald der Ringflansch 37 des äußeren Sicherungsteiles 2 an der Radialschulter 64 des Bauteiles 54 zur Anlage kommt (Fig. 4), werden beide Sicherungsteile 2, 3 aus der Gleitringdichtung geschoben, wie anhand des vorigen Ausführungsbeispiel beschrieben worden ist.

Das Sicherungsteil 3 ist bei dieser Ausführungsform wesentlich einfacher gestaltet als bei der vorigen Ausführungsform, was sich günstig auf die Herstellkosten auswirkt. Um die beiden Sicherungsteile 2, 3 beim Montagevorgang aus der Gleitringdichtung zu schieben, ist am Bauteil 54 nur noch die Radialschulter 64 erforderlich.

## Patentansprüche

1. Transportsicherung für eine Gleitringdichtung, mit einem hülsenförmigen Sicherungsteil (2), das an einem Ende wenigstens einen ersten Halteteil (29) und mit axialem Abstand zum ersten Halteteil (29) am anderen Ende wenigstens einen quer nach außen ragenden zweiten Halteteil (37) aufweist, der an einem radial elastisch verformbaren Hülsenteil (36) vorgesehen ist, wobei das Sicherungsteil (2) auf einem zweiten Sicherungsteil (3) sitzt, das im ersten Sicherungsteil (2) axial verschiebbar ist, mindestens einen Abstützteil (48, 69) aufweist, der in einer Transportstellung den Hülsenteil (36) des ersten Sicherungsteiles (2) radial elastisch aufweitet und gegen die durch die Verformung hervorgerufenen Radialkräfte radial abstützt, und wenigstens einen Anschlag (49) aufweist, in dessen Bewegungsweg wenigstens ein Gegenanschlag (30) mit einer Anschlagfläche (67, 68) des ersten Sicherungsteiles (3) liegt, worin die Anschlagfläche (67, 68) an der dem zweiten Halteteil (37) zugewandten Seite des Gegenanschlages (30) vorgesehen ist, **dadurch gekennzeichnet, dass** die Anschlagfläche (67, 68) innerhalb des Hülsenteiles (36) des ersten Sicherungsteiles (2) im Bereich zwischen dem ersten und dem zweiten Halteteil (29, 37) liegt, und dass der Anschlag (49) des zweiten Sicherungsteiles (3) im Bereich zwischen dem ersten und dem zweiten Halteteil (29, 37) des ersten Sicherungsteiles (2) liegt.

2. Transportsicherung nach Anspruch 1,
**dadurch gekennzeichnet, dass** der Abstützteil (48, 69) des zweiten Sicherungsteiles (3) hülsenförmig ausgebildet ist.

3. Transportsicherung nach Anspruch 1 oder 2,
**dadurch gekennzeichnet, dass** der Hülsenteil (36) des ersten Sicherungsteiles (2) wenigstens einen Axialschlitz (43) aufweist, der sich vom benachbarten Ende des ersten Sicherungsteiles (2) aus erstreckt.

4. Transportsicherung nach einem der Ansprüche 1 bis 3,
**dadurch gekennzeichnet, dass** der zweite Halteteil ein Ringflansch (37) ist, der vorzugsweise mit einer umlaufenden Ringkante (38) versehen ist.

5. Transportsicherung nach Anspruch 4,
**dadurch gekennzeichnet, dass** der Ringflansch (37) eine Anschlagfläche (42) aufweist, die vorteilhaft die Stirnseite des Ringflansches (37) ist und vorzugsweise in einer Radialebene des ersten Sicherungsteiles (2) liegt.

6. Transportsicherung nach einem der Ansprüche 1 bis 5,
**dadurch gekennzeichnet, dass** der Anschlag (48, 49) axialen Abstand von der Anschlagfläche (42) des ersten Sicherungsteiles (2) hat.

7. Transportsicherung nach einem der Ansprüche 1 bis 6,
**dadurch gekennzeichnet, dass** der Anschlag (49) kegelförmig ausgebildet ist.

8. Transportsicherung nach einem der Ansprüche 1 bis 7,
**dadurch gekennzeichnet, dass** der Gegenanschlag (30) als Ring ausgebildet ist, der koaxial zum zweiten Sicherungsteil (3) verläuft.

9. Transportsicherung nach einem der Ansprüche 1 bis 8,
**dadurch gekennzeichnet, dass** die Anschlagfläche des Gegenanschlages (30) eine Kegelfläche (67) oder eine Radialfläche (68) ist.

10. Transportsicherung nach einem der Ansprüche 1 bis 9,
**dadurch gekennzeichnet, dass** der Gegenanschlag (30) an seiner vom zweiten Sicherungsteil (3) abgewandten Seite mit dem radial nach außen gerichteten ersten Halteteil (29) versehen ist, der vorteilhaft mit wenigstens einem Verdrehschutz (31) versehen ist.

11. Gleitringdichtung mit einer Transportsicherung nach einem der Ansprüche 1 bis 10.

12. Gleitringdichtung nach Anspruch 11,
**dadurch gekennzeichnet, dass** ein Gleitring (5) innenseitig mit wenigstens einer Schulterfläche (39) versehen ist, die vom zweiten Halteteil (37) des ersten Sicherungsteiles (2) in der Transportstellung hintergriffen ist.

13. Gleitringdichtung nach Anspruch 11 oder 12,
**dadurch gekennzeichnet, dass** eine Dichtlippe (23) der Gleitringdichtung Abstand von der Außenseite (44) des ersten Sicherungsteiles (2) hat.

14. Verfahren zum Montieren einer Gleitringdichtung auf einer Welle, bei dem die Gleitringdichtung in einen Einbauraum zusammen mit der Transportsicherung eingebaut, anschließend eine Welle durch die montierte Gleitringdichtung geschoben und die Transportsicherung entfernt werden,
**dadurch gekennzeichnet, dass** beim Einschieben der Welle (54) das zweite Sicherungsteil (3) innerhalb des ersten Sicherungsteiles (2) durch Anlage einer Wellenschulter (58, 64) am Anschlag (48, 49) des zweiten Sicherungsteiles (3) axial verschoben wird, wobei der Abstützteil (48, 69) des zweiten Sicherungsteiles (3) entlang der Innenwand (46) des ersten Sicherungsteiles (2) so weit gleitet, dass sich der Hülsenteil (36) des ersten Sicherungsteiles (2) radial nach innen elastisch verformt, und dass beim weiteren Verschieben der Welle (54) das erste Sicherungsteil (2) und das zweite Sicherungsteil (3) axial aus der Gleitringdichtung herausgeschoben werden.

15. Verfahren nach Anspruch 14,
**dadurch gekennzeichnet, dass** der zweite Halteteil (37) des ersten Sicherungsteiles (2) bei nach innen verformtem Hülsenteil (36) im Bewegungsweg der Wellenschulter (58, 64) liegt.

16. Verfahren nach Anspruch 14 oder 15,
**dadurch gekennzeichnet, dass** die Gleitringdichtung eine Dichtlippe (23) aufweist, die Abstand von der Außenseite (44) des ersten Sicherungsteiles (2) hat und beim Verschieben des ersten Sicherungsteiles (2) durch das erste Sicherungsteil (2) über die Wellenschulter (58, 64) auf einen Wellenabschnitt (56, 57) mit größerem Durchmesser geleitet wird.

## Claims

1. A transport securing system for a slide ring seal, comprising a sleeve-shaped securing part (2) which has at least one first retaining part (29) at one end and at least one second retaining part (37) which projects transversely outwards with an axial spacing with respect to the first retaining part (29) at the other end, which is provided on a radially elastically deformable sleeve part (36), wherein the securing part (2) sits on a second securing part (3) which is axially displaceable in the first securing part (2), has at least one supporting part (48, 69) which in a transport position radially elastically expands the sleeve part (36) of the first securing part (2), and supports radially against the radial forces produced by the deformation, and has at least one stop (49) in the movement path of which at least one counter-stop (30) lies with a stop surface (67, 68) of the first securing part (2), wherein the stop surface (67, 68) is provided on the side of the counter-stop (30) facing the second retaining part (37),
**characterized in that** the stop surface (67, 68) lies inside the sleeve part (36) of the first securing part (2) in the region between the first and the second retaining part (29, 37) and that the stop (49) of the second securing part (3) lies in the region between the first and the second retaining part (29, 37) of the first securing part (2).

2. The transport securing system according to claim 1,
**characterized in that** the supporting part (48, 69) of the second securing part (3) is configured to be sleeve-shaped.

3. The transport securing system according to claim 1 or 2,
**characterized in that** the sleeve part (36) of the first securing part (2) has at least one axial slot (43) which extends from the neighbouring end of the first securing part (2).

4. The transport securing system according to any one of claims 1 to 3,
**characterized in that** the second retaining part is an annular flange (37) which is preferably provided with a circumferential annular edge (38).

5. The transport securing system according to claim 4,
**characterized in that** the annular flange (37) has a stop surface (42) which is advantageously the front side of the annular flange (37) and preferably lies in a radial plane of the first securing part (2).

6. The transport securing system according to any one of claims 1 to 5,
**characterized in that** the stop (48, 49) has an axial spacing from the stop surface (42) of the first securing part (2).

7. The transport securing system according to any one of claims 1 to 6,
**characterized in that** the stop (49) is configured to be conical.

8. The transport securing system according to any one of claims 1 to 7,
**characterized in that** the counter-stop (30) is configured as a ring which runs coaxially to the second securing part (3).

9. The transport securing system according to any one of claims 1 to 8,
**characterized in that** the stop surface of the counter-stop (30) is a conical surface (67) or a radial surface (68).

10. The transport securing system according to any one of claims 1 to 9,
**characterized in that** the counter-stop (30) is provided on its side facing away from the second securing part (3) with the radially outwardly directed first retaining part (29) which is advantageously provided with at least one anti-twisting device (31).

11. A slide ring seal with a transport securing system according to one of claims 1 to 10.

12. The slide ring seal according to claim 11,
**characterized in that** a slide ring (5) is provided on the inside with at least one shoulder surface (39) which is engaged by the second retaining part (37) of the first securing part (2) in the transport position.

13. The slide ring seal according to claims 11 or 12,
**characterized in that** a sealing lip (23) of the slide ring seal has a distance from the outer side (44) of the first securing part (2).

14. A method for mounting a slide ring seal on a shaft, in which the slide ring seal is installed in an installation space together with the transport securing system, then a shaft is pushed through the mounted slide ring seal and the transport securing system removed,
**characterized in that** during insertion of the shaft (54) the second securing part (3) is displaced axially inside the first securing part (2) by abutment of a shaft shoulder (58, 64) on the stop (48, 49) of the second securing part (3), wherein the supporting part (48, 69) of the second securing part (3) slides along the inner wall (46) of the first securing part (2) until the sleeve part (36) of the first securing part (2) is elastically deformed radially inwards and that during further displacement of the shaft (54) the first securing part (2) and the second securing part (3) are pushed out axially from the slide ring seal.

15. The method according to claim 14,
**characterized in that** the second retaining part (37) of the first securing part (2) lies in the movement path of the shaft shoulder (58, 64) when the sleeve part (36) is deformed inwardly.

16. The method according to claim 14 or 15,
**characterized in that** the slide ring seal has a sealing lip (23) which has a distance from the outer side (44) of the first securing part (2) and during displacement of the first securing part (2) is guided by the first securing part (2) over the shaft shoulder (58, 64) onto a shaft section (56, 57) with larger diameter.

## Revendications

1. Sécurité de transport pour une bague d'étanchéité, avec une pièce de blocage (2) en forme de douille, qui sur une extrémité comporte au moins une première pièce de retenue (29) et à un écart axial par rapport à la première pièce de retenue (29), sur l'autre extrémité comporte au moins une deuxième pièce de retenue (37) saillant à la transversale vers l'extérieur qui est prévue sur une partie de douille (36) élastiquement déformable en direction radiale, la pièce de blocage (2) étant assise sur une deuxième pièce de blocage (3) qui est déplaçable en direction axiale dans la première pièce de blocage (2), comportant au moins une pièce d'appui (48, 69) qui dans une position de transport élargit élastiquement en direction radiale la partie de douille (36) de la première pièce de blocage (2) et la soutient à l'encontre des forces radiales provoquées par la déformation, et au moins une butée (49) dans la course de déplacement de laquelle se situe au moins une contre-butée (30) avec une surface de butée (67, 68) de la première pièce de blocage (3) dans laquelle la surface de butée (67, 68) est prévue sur le face dirigée vers la deuxième pièce de retenue (37) de la contre-butée (30),
**caractérisé en ce que** la surface de butée (67, 68) se situe à l'intérieur de la partie de douille (36) de la première pièce de blocage (2), dans la région entre la première et la deuxième pièces de retenue (29, 37) et **en ce que** la butée (49) de la deuxième pièce de blocage (3) se situe dans la région entre la première et la deuxième pièces de retenue (29, 37) de la première pièce de blocage (2).

2. Sécurité de transport selon la revendication 1,
**caractérisé en ce que** la pièce d'appui (48, 69) de la deuxième pièce de blocage (3) est conçue en forme de douille.

3. Sécurité de transport selon la revendication 1 ou 2,
**caractérisé en ce que** la partie de douille (36) de la première pièce de blocage (2) comporte au moins une entaille axiale (43) qui s'étend à partir de l'extrémité voisine de la première pièce de blocage (2).

4. Sécurité de transport selon l'une quelconque des revendications 1 à 3,
**caractérisé en ce que** la deuxième pièce de retenue est une bride annulaire (37) qui est munie de préférence d'une arête annulaire (38) périphérique.

5. Sécurité de transport selon la revendication 4,
**caractérisé en ce que** la bride annulaire (37) comporte une surface de butée (42) qui est de préférence la face frontale de la bride annulaire (37) et qui se situe de préférence dans un plan radial de la première pièce de blocage (2).

6. Sécurité de transport selon l'une quelconque des revendications 1 à 5,
**caractérisé en ce que** la butée (48, 49) présente un écart axial par rapport à la surface de butée (42) de la première pièce de blocage (2).

7. Sécurité de transport selon l'une quelconque des revendications 1 à 6,
**caractérisé en ce que** la butée (49) est conçue de forme conique.

8. Sécurité de transport selon l'une quelconque des revendications 1 à 7,
**caractérisé en ce que** la contre-butée (30) est conçue sous la forme d'une bague qui s'écoule de manière coaxiale à la deuxième pièce de blocage (3).

9. Sécurité de transport selon l'une quelconque des revendications 1 à 8,
**caractérisé en ce que** la surface de butée de la contre-butée (30) est une surface conique (67) ou une surface radiale (68).

10. Sécurité de transport selon l'une quelconque des revendications 1 à 9,
**caractérisé en ce que** sur sa face opposée à la deuxième pièce de blocage (3), la contre-butée (30) est munie de la première pièce de retenue (29) dirigée en direction radiale vers l'extérieur, qui est munie de préférence d'une sécurité anti-rotation (31).

11. Bague d'étanchéité glissante comprenant une telle sécurité de transport selon l'une quelconque des revendications 1 à 10.

12. Bague d'étanchéité glissante selon la revendication 11,
**caractérisée en ce qu'**une bague coulissante (5) est munie sur sa face intérieure d'au moins une surface d'épaulement (39) qui dans la position de transport est accrochée par l'arrière par la deuxième pièce de retenue (37) de la première pièce de blocage (2).

13. Bague d'étanchéité glissante selon la revendication 11 ou 12,
**caractérisée en ce qu'**une lèvre d'étanchéité (23) de la bague d'étanchéité glissante présente un écart par rapport à la face extérieure (44) de la première pièce de blocage (2).

14. Procédé destiné au montage d'une bague d'étanchéité glissante sur un arbre, lors duquel on encastre la bague d'étanchéité glissante dans un espace de montage, en commun avec le dispositif de blocage au transport, on pousse ensuite un arbre à travers la bague d'étranchéité glissante montée et on retire le dispositif de blocage au transport,
**caractérisé en ce que** lors de l'insertion de l'arbre (54), la deuxième pièce de blocage (3) est déplacée en direction axiale à l'intérieur de la première pièce de blocage (2) par appui sur un épaulement d'arbre (58, 64) sur la butée (48, 49) de la deuxième pièce de blocage (3), la pièce d'appui (48, 69) de la deuxième pièce de blocage (3) coulissant le long de la paroi intérieure (46) de la première pièce de blocage (2) aussi loin que la partie de douille (36) de la première pièce de blocage (2) se déforme élastiquement en direction radiale vers l'intérieur et **en ce que** lors du déplacement ultérieur de l'arbre (54), la première pièce de blocage (2) et la deuxième pièce de blocage (3) sont poussées en direction axiale hors de la bague d'étanchéité glissante.

15. Procédé selon la revendication 14,
**caractérisé en ce que** lorsque la partie de douille (36) est déformée vers l'intérieur, la deuxième pièce de retenue (37) de la première pièce de blocage (2) se situe dans la course de déplacement de l'épaulement d'arbre (58, 64).

16. Procédé selon la revendication 14 ou 15,
**caractérisé en ce que** la bague d'étanchéité glissante comporte une lèvre d'étanchéité (23) qui présente un écart par rapport à la face extérieure (44) de la première pièce de blocage (2) et qui lors du déplacement de la première pièce de blocage (2) à travers la première pièce de blocage (2) est dirigée par-dessus l'épaulement d'arbre (58, 64) sur un tronçon d'arbre (56, 57) à plus grand diamètre.
